(19) Europäisches Patentamt
European Patent Office
Office européen des brevets

(11) **EP 2 530 650 A1**

(12) **EUROPEAN PATENT APPLICATION**

(43) Date of publication:
**05.12.2012 Bulletin 2012/49**

(51) Int Cl.:
***G06T 7/00*** *(2006.01)*

(21) Application number: **11275091.4**

(22) Date of filing: **03.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BAE Systems Plc**
**London SW1Y 5AD (GB)**

(72) Inventors:
• **Jones Christopher, Charles, Rawlinson**
  **Preston, Lancashire, PR14 1AX (GB)**

• **Bentley, Stephen**
  **Warton, Preston, Lancashire**
  **PR4 1AX (GB)**
• **Fairhurst, Michael, John**
  **Warton, Preston, Lancashire**
  **PR4 1AX (GB)**
• **Eccles, Mark**
  **Warton, Preston, Lancashire**
  **PR4 1AX (GB)**

(74) Representative: **BAE SYSTEMS plc**
**Group IP Department**
**Farnborough Aerospace Centre**
**Farnborough**
**Hampshire GU14 6YU (GB)**

(54) **SENSOR DATA PROCESSING**

(57) A method and apparatus for performing image processing, the method comprising: positioning a mark (14, 20) onto a surface (12) (for example, by projecting a laser dot or laser lines onto the surface); using a first sensor (4) (e.g. a UV camera), generating a first image (16) of the surface (12) with at least a portion of the mark (14, 20) in the first image (16); using a second sensor (6) (e.g. a visible-light camera), generating a second image (18) of the surface (12) with at least a portion of the mark (14, 20) in the second image (18); and performing a process that is dependent upon the respective positions of the at least a portion of the mark (14, 20) in the first image (16) and the second image (18).

Fig. 15

**Description**

FIELD OF THE INVENTION

The present invention relates to processing of sensor data. In particular, the present invention relates to the processing of data corresponding to respective images of a scene generated using two respective sensors.

BACKGROUND

Image registration is an image processing technique that is performed to match two or more pictures taken, for example, at different times, from different sensors, or from different viewpoints.

Image registration tends to be an important technique in applications such as target recognition, surveillance, autonomous navigation, performing medical diagnosis, and quality checking.

Typically, image registration comprises determining a spatial transformation to be performed on one image to register that image to another.

The spatial transformation is typically calculated using intensity-based and/or feature-based alignment algorithms.

Intensity-based algorithms compare intensity patterns in images Feature-based algorithms find correspondence between image features such as points, object edges, and contours.

However, in some applications, for example when a surface being images is relatively homogenous, changes in image intensity may be very slight and/or useful images features may be relatively rare.

SUMMARY OF THE INVENTION

In a first aspect, the present invention provides a method of performing image processing, the method comprising positioning a mark onto a surface, using a first sensor, generating a first image of the surface with at least a portion of the mark in the first image, using a second sensor, generating a second image of the surface with at least a portion of the mark in the second image, and performing a process that is dependent upon the respective positions of the at least a portion of the mark in the first image and the second image.

The step of performing a process that is dependent upon the respective positions of the at least a portion of the mark in the first image and the second image may comprise performing an image registration process to register the first and second images.

The step of positioning a mark onto a surface may comprise projecting the mark onto the surface.

The mark may be projected onto the surface using a laser.

The mark may be a laser dot.

The mark may comprise a pair of laser lines, the laser lines being substantially non-parallel and non-perpendicular to each other.

The mark may have a non-symmetrical shape.

A sensor may be a line-scan sensor, and the mark may be positioned on the surface such that the at least a portion of the mark in the image generated by that sensor is present in a single line of that image.

The first sensor and the second sensor may be different types of sensor.

The second sensor may be a visible light camera and the first sensor may be either an ultra-violet camera or an infrared camera.

The step of positioning a mark onto a surface may be performed at each of a plurality of different time-steps in a time period, the step of generating a first image may be performed for a first portion of the time period, the step of generating a second image may be performed for a second portion of the time period, and the step of performing a process that is dependent upon the respective positions of the at least a portion of the mark in the first image and the second image may comprise performing an time-alignment process to temporally align the first and second images.

The first sensor and the second sensor may be mounted on an aircraft.

In a further aspect, the present invention provides apparatus for performing image processing, the apparatus comprising: means for positioning a mark onto a surface, a first sensor arranged to generate a first image of the surface with at least a portion of the mark in the first image, a second sensor arranged to generate a second image of the surface with at least a portion of the mark in the second image, and a processor arranged to perform a process that is dependent upon the respective positions of the at least a portion of the mark in the first image and the second image.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the above aspect.

BRIEF DESCRIPTION OF THE DRAWINGS

Figure 1 is a schematic illustration (not to scale) of an aircraft that will be used to implement an embodiment of an image registration process;

Figure 2 is a schematic illustration (not to scale) of a scenario in which the aircraft will be used to implement an embodiment of the image registration process;

Figure 3 is a process flow-chart showing certain steps of an embodiment of the image registration process;

Figure 4 is a schematic illustration (not to scale) of an ultraviolet (UV) image and a visible light image;

Figure 5 is a schematic illustration (not to scale) showing the UV image and the visible light image such that positions of a laser dot in the images are aligned;

Figure 6 is a process flow chart showing certain steps of an image registration process according to a further embodiment;

Figure 7 is a schematic illustration (not to scale) of the aircraft flying in the proximity of the area of terrain in the further embodiment;

Figure 8 is a schematic illustration (not to scale) showing the lines relative to the direction of travel of the aircraft;

Figure 9 is a schematic illustration (not to scale) of the UV image and the visible light image in a second further embodiment;

Figure 10 is a process flow-chart showing certain steps of an image registration and camera alignment process used in the second further embodiment;

Figure 11 is a schematic illustration of the UV image and the visible light image that have been registered;

Figure 12 is a schematic illustration (not to scale) of an image taken using the UV camera over a first time-period;

Figure 13 is a schematic illustration (not to scale) of an image taken using the visible light camera over a second time-period;

Figure 14 is a process flow-chart showing certain steps of an example of an image time-alignment process implemented using the processor; and

Figure 15 is a schematic illustration (not to scale) of a time-aligned second UV image and second visible light image.

DETAILED DESCRIPTION

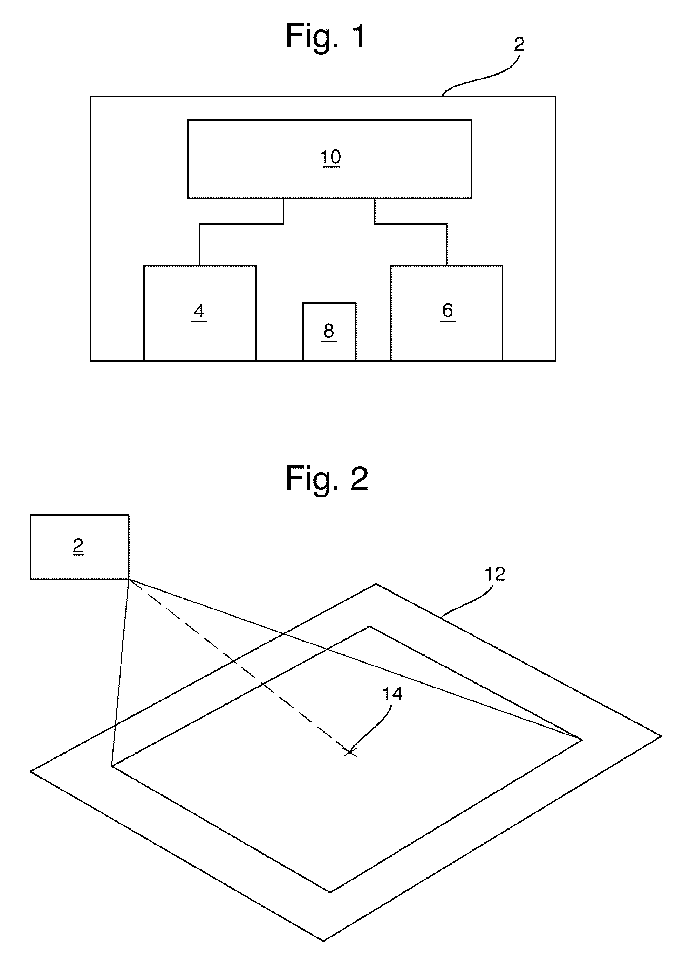

Figure 1 is a schematic illustration (not to scale) of an aircraft 2 that will be used to implement an embodiment of an image registration process. In this embodiment the image registration process is performed to register images from two different types of camera.

In this embodiment, the aircraft 2 is an unmanned aircraft. The aircraft 2 comprises an ultraviolet (UV) camera 4, a visible light camera 6, a laser marker 8, and a processor 10.

In this embodiment, the UV camera 4 is a line-scan camera, i.e. an image capturing device having a sensor which is formed of a single line of ultraviolet light sensitive elements (pixels). As the aircraft 2 flies in the proximity of an area of terrain, the UV camera 4 is arranged to capture high resolution UV band images of the area of terrain, as described in more details later below with reference to Figure 2. The image acquisition is made line by line as the aircraft 2 flies over the area of terrain.

Also, in this embodiment the UV camera 4 is coupled to the processor 10.

In this embodiment, the visible light camera 6 is a line-scan camera, i.e. an image capturing device having a sensor which is formed of a single line of visible light sensitive elements (pixels). As the aircraft 2 flies in the proximity of an area of terrain, the visible light camera 6 is arranged to capture high resolution visible light band images of the area of terrain, as described in more details later below with reference to Figure 2. The image acquisition is made line by line as the aircraft 2 flies over the area of terrain.

Also, in this embodiment the visible light camera 6 is coupled to the processor 10.

In this embodiment, the UV camera 4and the visible light camera 6are mounted on an optical bench or optical table (not shown in Figure 1) inside the aircraft 2. The optical bench provides that unwanted movement of one camera relative to the other camera is substantially prevented.

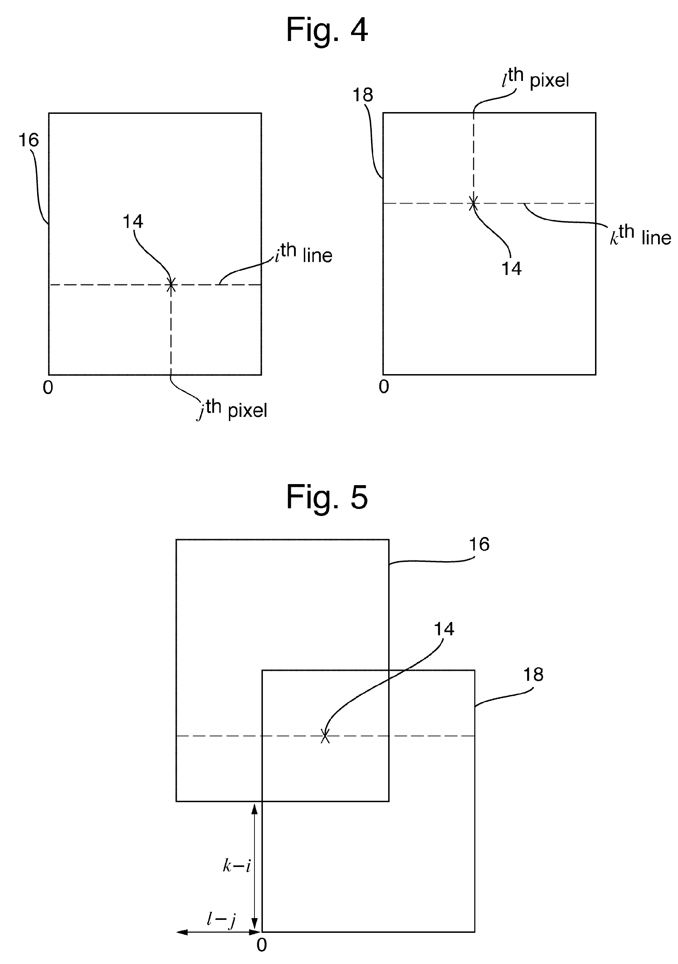

In this embodiment, the optical bench comprises one or more actuators (not shown in Figure 1). The one or more actuators provide that one or both cameras 4, 6 may be moved relative to the other camera on the optical bench. The movement of a camera relative to the other camera is performed according to an instruction received at the optical bench from the processor 10. Such an instruction, and the determination thereof, is described in more detail later below with reference to Figure 4.

Furthermore, the optical bench provides that unwanted rotation of a camera is substantially prevented.

In this embodiment, the laser marker 8 is arranged to emit laser light such that the laser light is detectable by the UV camera 4 and the visible light camera 6. In this embodiment, data corresponding to the images captured by the UV camera 4 and the visible light camera 6 is sent from the relevant camera 4, 6 to the processor 10. The processor 10 processes the received data, and generates a movement instruction for one or both of the cameras 4, 6, as described in more detail later below with reference to Figure 4.

Figure 2 is a schematic illustration (not to scale) of a scenario in which the aircraft 2 will be used to implement an embodiment of an image registration process.

In this scenario, the aircraft 2 flies in the proximity of the area of terrain 12.

As the aircraft 2 flies in the proximity of the area of terrain 12, each camera 4, 6 captures an image of part of the area of terrain 12.

In this embodiment, the cameras 4, 6 are line-scan cameras. Thus, respective the images are captured line-by-line as the aircraft flies over the area of terrain.

The image of the area of terrain 12 captured by the UV camera 4 is hereinafter referred to as the "UV image".

The image of the area of terrain 12 captured by the visible light camera 6 is hereinafter referred to as the "visible light image".

In this embodiment, as the aircraft flies over the area of terrain 12, and as the cameras 4, 6 are capturing respective images of the area of terrain 12, at a particular point in time the laser marker 8 emits a laser pulse. The emitted laser pulse forms a mark on the area of terrain. In this embodiment the mark is a single dot formed by the laser marker on the terrain and is hereinafter referred to as the "laser dot 14", as indicated in Figure 2 by an 'X'.

The laser dot 14 is captured by the cameras 4, 6 as they capture their respective images because the laser dot 14 is made by light that has a wavelength that is detectable by both the UV and visible light cameras 4, 6.

In this embodiment, the duration of the laser pulse from the laser marker 8 is such that the laser dot 14 is present in a single line of the respective line-scanned images taken by the UV camera 4 and the visible light camera 6. Also, the diameter of the laser pulse from the laser marker 8 is such that the laser dot 14 occupies a single pixel in a particular line of each of the images captured by the UV camera 4 and the image captured by the visible light camera 6. Thus, in other words the laser dot 14 appears in both the UV image and the visible light image on a single line of that image, and at a single pixel along that line.

In this embodiment, data corresponding to the UV and visible light images gathered by the UV camera 4 and visible light camera 6 respectively is sent to the processor 10.

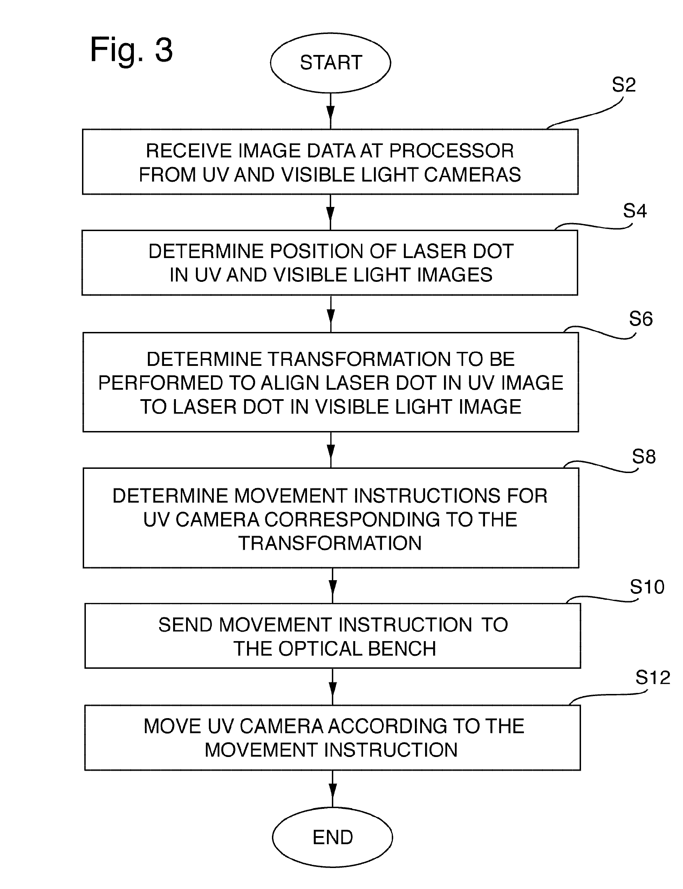

Figure 3 is a process flow-chart showing certain steps of an image registration and camera alignment process implemented using the processor 10.

At step s2, image data from the UV camera 4 and the visible light camera 6 is received by the processor 10. In this embodiment, data from the cameras 4, 6 is sent from the cameras 4, 6 to the processor 10 as the images are being captured.

At step s4, the image data from the UV camera 4 is processed to determine a position of the image of the laser dot 14 in the UV image. Also, the image data from the visible light camera 6 is processed to determine a position of the image of the laser dot 14 in the visible light image.

Figure 4 is a schematic illustration (not to scale) of the UV image 16 and the visible light image 18. The position of the image of the laser dot 14 in each of the images 16, 18 is indicated in Figure 4 by an "X" and the reference numeral 14.

In this embodiment, in the UV image 16 the laser dot 14 appears in the $i$th line of that image, and in the jth pixel along the $i$th line. Thus, the coordinates of the laser dot 14 in the UV image 16 relative to an origin O are ($j,i$).

In this embodiment, in the visible light image 18 the laser dot 14 appears in the kth line of that image, and in the $l$th pixel along the kth line. Thus, the coordinates of the laser dot 14 in the visible light image 18 relative to the origin O are ($l,k$).

At step s6, the processor 10 determines a transformation T that translates the UV image 16 relative the origin O such that the position of the laser dot 14 in the UV image 16 is aligned with the position of the laser dot 14 in the visible light image 18.

Figure 5 is a schematic illustration (not to scale) showing the UV image 16 and the visible light image 18 such that the positions of the laser dot 14 in the images 16, 18 are aligned.

In this embodiment, the transformation T that translates the UV image 16 relative to the origin O such that the positions of the laser dot 14 in the UV and visible light images 16, 18 are aligned is:

$$T = \begin{pmatrix} l - j \\ k - i \end{pmatrix}$$

At step s8, a movement instruction for the UV camera 4 is determined by the processor 10 using the transformation T determined at step s6 above.

In this embodiment, the movement instruction is an instruction to move the UV camera 4 relative to the visible light camera 6 such that an image being captured by that camera is transformed according to the transformation T determined at step s8 above.

Thus, in this embodiment UV camera 4 is moveable (relative to the visible light camera 6) in at least two directions, those two directions spanning the plane of the UV image 16. For example, the UV camera 4 may be moveable in a direction substantially parallel to a line scanned by the UV camera 4, and a direction substantially perpendicular to a line scanned by the UV camera 4.

At step s10, the movement instruction is sent from the processor 10 to the optical bench.

At step s12, the UV camera 4 is moved relative to the visible light camera 6 using the actuators of the optical bench according to the received movement instruction.

Thus, an image registration and camera alignment process is provided.

In this embodiment, the UV camera 4 is moved relative to the visible light camera 6 to register images produced by those cameras 4, 6. In particular, a transformation that transforms the UV image 16 such that the positions of the laser dot 14 in the UV and visible light images 16, 18 overlap is determined, and the UV camera 4 is moved such that the UV image 14 being captured by the UV camera 4 is transformed by that transformation.

However, in other embodiments the visible light camera 6 is moved relative to the UV camera 4 to register images produced by those cameras 4, 6, i.e. the UV camera 4 may be held relatively stationary, and the visible light camera 6 moved as described above for the UV camera 4.

Also, in other embodiments both the UV and visible light cameras 4, 6 may be moved as described above. For example, each camera may be moved so that the image of the laser dot 14 in the image generated using that camera is at a particular pixel (e.g. a pixel substantially in the centre of the image).

An advantage provided by the above described image registration and camera alignment process is that the UV images are and the visible light images are aligned. Thus, UV and visible light images data is available for an area of terrain.

Moreover, after the movement of the UV camera 4 at step s12, the overlap between the UV and visible light images 16, 18 tends to be maximised. This advantageously tends to provide that the area of terrain for which contemporaneous UV and visible light information is gathered, is maximised.

A further advantage provided by the above described process is that image registration is performed in such a way that tends to avoid the use of computationally expensive processes, such as feature extraction. The above described method tends to be more computationally efficient than conventional methods.

The provided method tends to provide a relatively precise alignment of two images of the same region or space. The process tends to be relatively fast and efficient. This advantageously tends to allow for real-time or near real-time processing of image data.

Conventionally, image registration techniques tend to involve the use of complex and/or very large computer programs to distinguishing a set of reference features. This is typically a lengthy process and is typically prone to error, especially in cases where distinguishable features are rare. The provided process tends to alleviate the difficult problems of having few/no distinguishable reference features by projecting a laser dot on to the region or space under observation. The provided process tends to allow for image registration in situations irrespective of whether there are useful reference features or not. Thus, the provided process tends to be particularly useful in industrial applications such as sheet metal production quality checking.

The above described system/process advantageously uses a marker device to project a mark on to an imaged surface to create a feature that is used to allow alignment of different images of that surface.

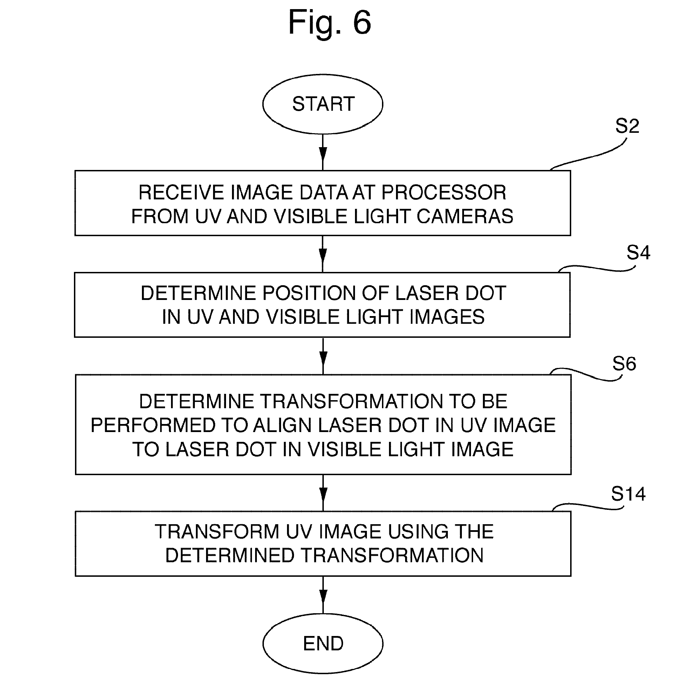

In the above embodiments, one or more of the cameras 4, 6 that are used to capture images are moved relative to the other camera. However, in other embodiments, the cameras are not moved (or indeed be moveable) relative to one another. Figure 6 is a process flow chart showing certain steps of an image registration process according to one such further embodiment in which the cameras are not moved.

In this further embodiment, steps s2 to s6 are performed as described in more detail above with reference to Figure 3.

In this further embodiment, after performing step s6, the process proceeds to step s14.

At step s14, the UV image 16 is transformed using the determined transformation T.

Thus, an image registration process is performed.

In this further embodiment, the overlap between the UV and visible light images 16, 18 may not be maximised. Thus, the area of terrain for which contemporaneous UV and visible light information is gathered tends not to be maximised. In other words, contemporaneous UV and visible light information is gathered for an area of terrain corresponding to the overlap of the UV image 16 and the visible light image 18 shown in Figure 5.

However, an advantage provided by this further embodiment is that the cameras 4, 6 on the aircraft 2 do not need to be moveable with respect to one another. This tends to increase the stability of the cameras 4, 6 on the aircraft 2.

A further advantage provided by this further embodiment is that the registration of the images can be implemented by processing alone. Also, the image registration process can be performed after the images have been collected. For example, images could be collected over a particular time period, and, if desired, those images could be registered at a later time.

In the above embodiments, a single laser dot 14 is projected onto the area of terrain 12. The image of this laser dot 14 in each of the UV and visible light images 16, 18 is then used to register those images 16, 18. However in other embodiments, a different number of laser dots are projected on to the area of terrain and used in the image registration process. In such embodiments, the plurality of laser dots may be projected from one or more laser markers. Also, one or more of the plurality of laser dots may have a different wavelength to a number of the other laser dots. The laser dots may be projected onto the area of terrain in any appropriate pattern, for example a pattern having no lines of symmetry.

An advantage of projecting a plurality of laser dots projected onto the area of terrain in a pattern that has no lines of symmetry is that registration of the images tends to correct for rotation of one of the images with respect to the other. In other words, the orientation of a mark (i.e. pattern produced by the laser marker on the surface of the terrain) can be determined and, thus, detection of whether an image and/or camera is rotated relative to another tends to be possible. In such embodiments, a resultant movement instruction for a camera may comprise an instruction to rotate the camera relative to the other camera e.g. to correct for such rotations.

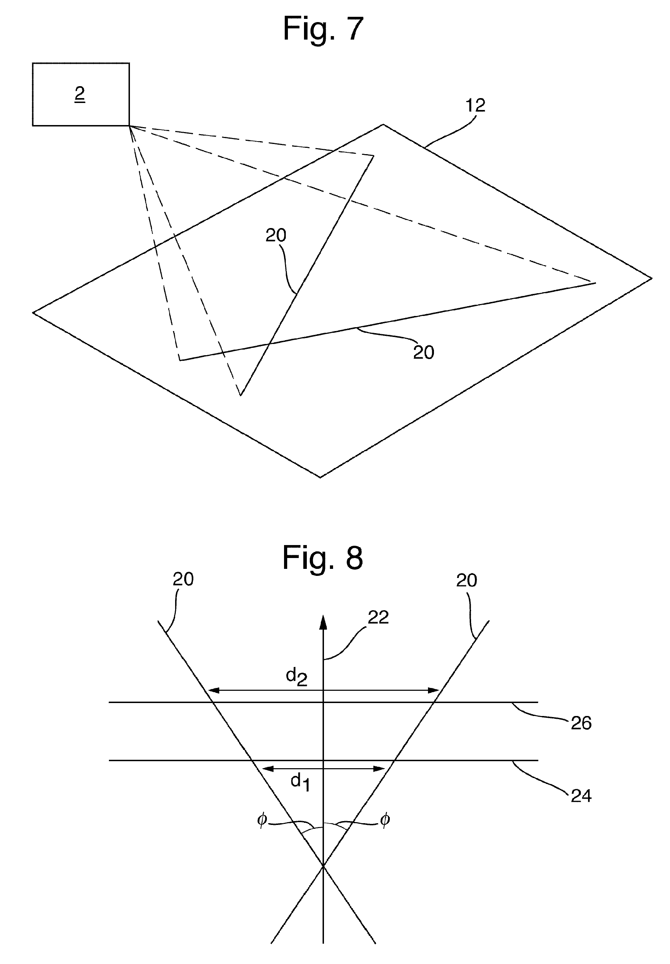

In the above embodiments, the registration processes are implemented using laser dots. However, in other embodiments a laser marker may project a different shape (e.g. a line) on to the terrain. A second further embodiment in which two lines are projected onto the area of terrain will now be described with reference to Figures 7 to 11.

Figure 7 is a schematic illustration (not to scale) of the aircraft 2 flying in the proximity of the area of terrain 12 in the further embodiment.

As shown in Figure 7, in this second further embodiment the laser marker 8 projects two laser lines 20 on to the area of terrain 12. In this embodiment, the laser lines are projected by the laser marker 8, for example by using a laser beam splitter. However, in other embodiments a different separate laser marker may project each laser line.

Figure 8 is a schematic illustration (not to scale) showing the laser lines 20 relative to the direction of travel 22 of the aircraft 2 (the direction 22 shown as an arrow in Figure 8).

In this embodiment, the laser lines 20 are cast along carefully measured angles. In this embodiment, the angle between a laser line 20 and the direction of travel of the aircraft 2 is denoted by $\phi$. Thus, in this embodiment, the angle between the two laser lines 20 projected on the area of terrain 12 is $2\phi$.

In this embodiment, the lines scanned by the line-scan UV and visible light cameras 4, 6 are substantially perpendicular to the direction 22 of the aircraft 2.

A line scanned by the UV camera 4 is shown as a line in Figure 8 and is indicated by the reference numeral 24. This line is hereinafter referred to as "the UV line".

A line scanned by the visible light camera 6 is shown as a line in Figure 8 and is indicated by the reference numeral 26. This line is hereinafter referred to as "the visible light line".

In this embodiment, the laser lines 20 are projected on to the area of terrain 12 by a pulse from the laser marker 8. The duration of the laser pulse from the laser marker 8 is such that each laser line 20 appears as a single dot in a single line of the respective line-scanned images taken by the UV camera 4 and the visible light camera 6. Also, the width of each laser line 20 projected by the laser marker 8 is such that each laser line 20 occupies a single pixel in a particular line of each of the images captured by the UV camera 4 and the image captured by the visible light camera 6. Thus, in other words each laser line 20 appears in both the UV image 16 and the visible light image 18 on a single line of that image, and at a single pixel along that line.

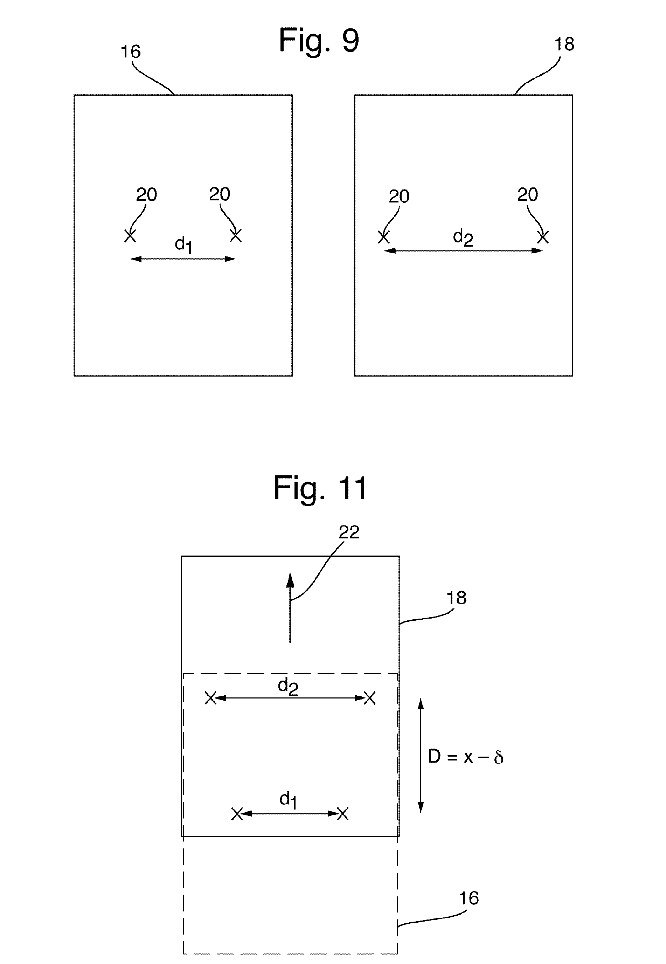

In this embodiment, at the time the laser lines 20 are projected on to the area of terrain 12, the UV line 24 and the visible light line 26 are being scanned at different relative positions. Thus, as shown in Figure 9, the laser lines 20 appear as dots in the UV image 16 that are a distance $d_1$ apart. Also, as shown in Figure 9, the laser lines 20 appear as dots in the visible light image 18 that are a distance $d_2$ apart.

Figure 9 is a schematic illustration (not to scale) of the UV image 16 and the visible light image 18 in the second further embodiment. The position of the image of each of the laser lines 20 in each of the images 16, 18 is indicated in Figure 9 by an "X" and the reference numeral 20.

In the UV image 16, the dots resulting from the laser lines 20 are at a distance of $d_1$ from each other.

In the visible light image 18, the dots resulting from the laser lines 20 are at a distance of $d_2$ from each other.

The laser lines 20 are captured (as dots) by the cameras 4, 6 as they capture their respective images because the laser lines 20 are made by light that has a wavelength that is detectable by both the UV and visible light cameras 4, 6.

In this second further embodiment, data corresponding to the UV and visible light images gathered by the UV camera 4 and visible light camera 6 respectively is sent to the processor 10.

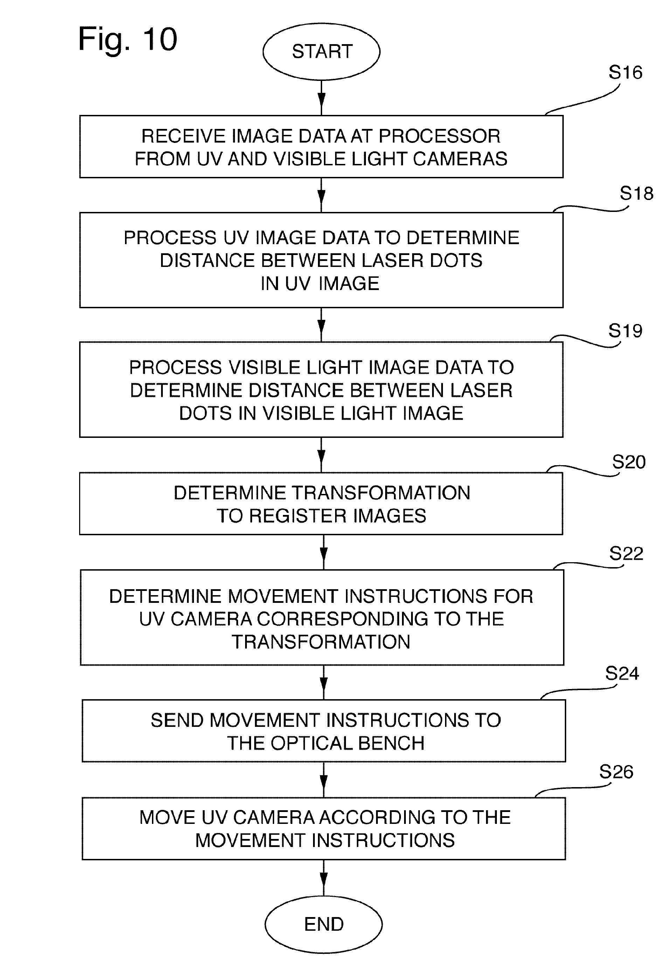

Figure 10 is a process flow-chart showing certain steps of an image registration and camera alignment process used in the second further embodiment.

At step s16, image data from the UV camera 4 and the visible light camera 6 is received by the processor 10. In this second further embodiment, data from the cameras 4, 6 is sent from the cameras 4, 6 to the processor 10 as the images are being captured.

At step s18, the image data from the UV camera 4 is processed to determine a distance between the laser dots 20 in the UV image 16, i.e. the distance $d_1$ is determined.

At step s19, the image data from the visible light camera 6 is processed to determine a distance between the laser dots 20 in the visible light image 18, i.e. the distance $d_2$ is determined.

At step s20, the processor 10 determines a transformation T' that registers the UV image 16 and the visible light image 18.

Figure 11 is a schematic illustration of the UV image 16 and the visible light image 18 that have been registered. For purposes of clarity, the UV image 16 is shown as a dotted line.

In this embodiment, for the UV image 16 and the visible light image 18 to be registered the UV image 16 is moved in a direction opposite to the direction of travel 22 of the aircraft 2 by a distance D.

In this second further embodiment, the distance D is determined as follows:

$$D = x\delta = \frac{d_2 - d_1}{2\tan\phi}$$

where:

> $x$ is the length of a single pixel in an image 16, 18 in the direction of travel 22;
> $\delta$ is a number of pixels that an image is to be moved in the direction of travel;
> $d_1$ is the distance between the images of the laser lines 20 in the UV image 16;
> $d_2$ is the distance between the images of the laser lines 20 in the visible light image 18; and
> $\phi$ is the angle between a laser line 20 and the direction of travel 22.

Thus, $\delta$ may be expressed as:

$$\delta = \frac{d_2 - d_1}{2x\tan\phi}$$

A similar calculation can be performed to perform lateral image alignment. For example, lateral image alignment may be achieved as follows.

Firstly, a central point of a line joining the dots (i.e. the image of the laser lines 20) in each image is determined.

Secondly, one or both of the images are shifted in a direction substantially parallel to the line joining the dots in the respective image, until the central points in the images are laterally aligned.

At step s22, a movement instruction for the UV camera 4 is determined by the processor 10 using the transformation T' determined at step s20 above.

In this embodiment, the movement instruction is determined in the same way as described above at step s8 for a previous embodiment.

At step s24, the movement instruction is sent from the processor 10 to the optical bench.

At step s26, the UV camera 4 is moved relative to the visible light camera 6 using the actuators of the optical bench according to the received movement instruction.

Thus, a further image registration and camera alignment process is provided.

In addition to those advantages provided by the above described embodiments, the second further embodiment advantageously provides that a rotation of one camera relative to the other camera may be corrected for.

In this second further embodiment, the UV camera 4 is moved relative to the visible light camera 6 to register images produced by those cameras 4, 6. However, in other embodiments the visible light camera 6 is moved relative to the UV camera 4, or both the UV and visible light cameras are moved relative to each other and/or the optical bench.

In the above embodiments, a laser dot 14 (or pair of laser lines 20) is projected onto the area of terrain 12 at a single time-step, i.e. by a single pulse from the laser marker 8. This advantageously provides that two images, e.g. from different sources/cameras can be aligned in time.

For example, in an above embodiment the laser dot 14 is found to occupy the *i*th line of the UV image 16 and the kth line of the visible light image 18. Thus, it can be determined that the ith line of the UV image 16 and the kth line of the visible light image were captured at substantially the same point in time.

In a further example, if instead of a continuous line-scanned image, the UV and visible light cameras 4, 6 took a sequence of images of the area of terrain 12, then if the image of the laser dot 14 was found to occupy the nth image in the sequence of images taken by the UV camera 4, and the mth image in the sequence of images taken by the visible light camera 6, it can be determined that the nth image taken by the UV camera 4 and the mth image taken by the visible light camera 6 were captured at substantially the same point in time.

Thus, time-alignment of images can be performed without registering the images. A time-alignment process can be performed instead of, or in addition to, any or all of the above described image registration and/or image registration and camera alignment processes.

A further example of by which time-alignment of images or image sequences can be performed will now be described. This further example of time-alignment tends to be more accurate than performing time-alignment of images (or sequences of images) using a single laser dot (or pair of laser lines) created by a single pulse.

In this example, as the aircraft 2 flies over the area of terrain 12, the laser marker 8 projects a laser dot 14 on to the area of terrain at different points in time.

In this example, the time-steps at which the laser dot 14 is projected onto the area of terrain are in a pseudo-random sequence.

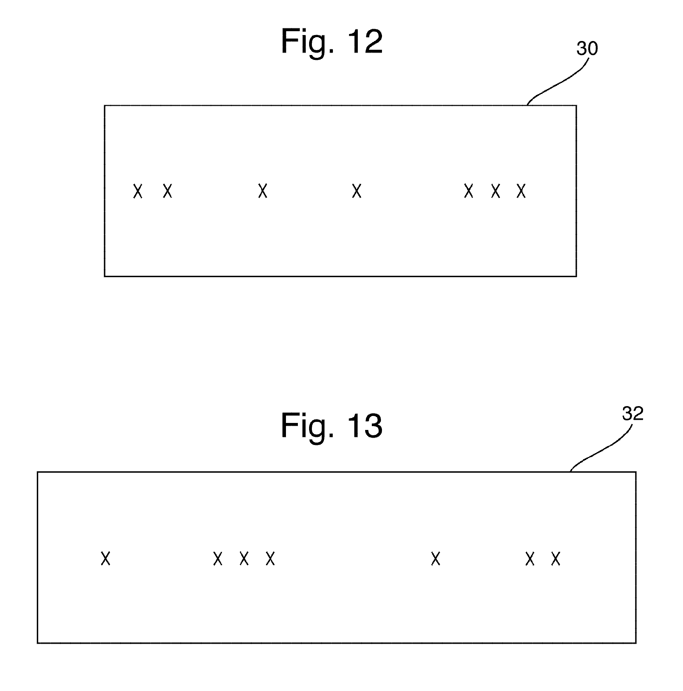

Figure 12 is a schematic illustration (not to scale) of an image taken using the UV camera 4 over a first time-period. This image is hereinafter referred to as the "second UV image" and is indicated in Figure 12 by the reference numeral 30. The images in second UV image 30 of the laser dots that are projected on to the area of terrain 12 in a pseudo-random sequence are indicated in Figure 12 by an 'X'.

Figure 13 is a schematic illustration (not to scale) of an image taken using the visible light camera 6 over a second time-period. This image is hereinafter referred to as the "second visible light image" and is indicated in Figure 13 by the reference numeral 32. The images in second visible light image 32 of the laser dots that are projected on to the area of terrain 12 in a pseudo-random sequence are indicated in Figure 13 by an 'X'.

In this example, the first and second time-periods are different time-periods, i.e. time-periods of different lengths and/or time-periods that span different time ranges. However, in this example, the first and second time periods overlap to some extent. In other examples, the time periods may be the length and may overlap wholly or partially.

In this embodiment, data corresponding to the second UV and visible light images 30, 32 gathered by the UV camera 4 and visible light camera 6 respectively is sent to the processor 10 as the aircraft 2 files over the area of terrain 12.

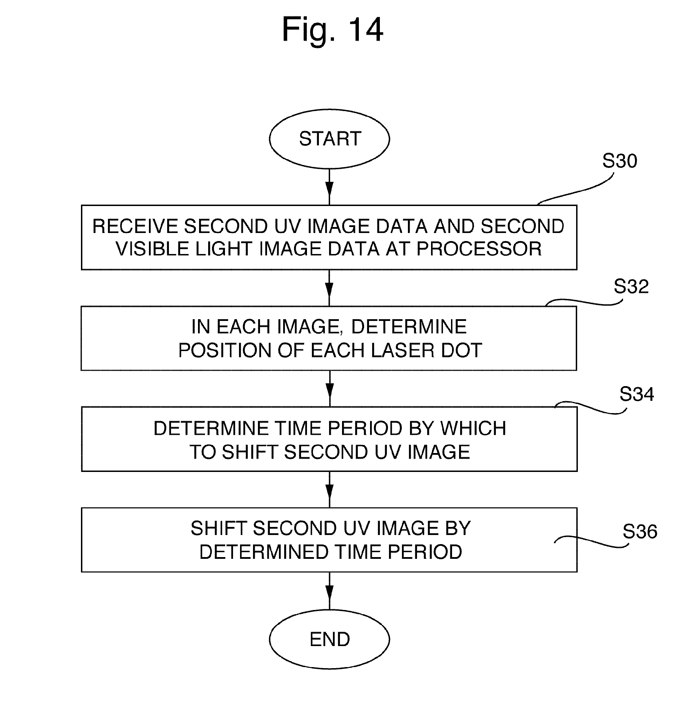

Figure 14 is a process flow-chart showing certain steps of an example of an image time-alignment process implemented using the processor 10.

At step s30, image data corresponding to the second UV image 30 camera 4 and the visible light camera 6 is received by the processor 10. In this example, data from the cameras 4, 6 is sent from the cameras 4, 6 to the processor 10 as the second images 30, 32 are being captured.

At step s32, the image data from the UV camera 4 is processed to determine a position of each of the images of the laser dots in the second UV image 30. Also, the image data from the visible light camera 6 is processed to determine a position of each of the images of the laser dots in the second visible light image 32. In this example, the position of an image of the laser dot in a line-scan image corresponds to a time-step at which that laser dot was captured by the camera.

At step s34, the processor 10 determines a time-period by which to shift the second UV image 30 relative to the second visible light image 32 until the positions of the laser dots in the second UV image 30 are aligned with the positions of the laser dots in the second visible light image 32.

In this example, the time period by which to shift an image is determined as follows.

Firstly, positions of the laser dots in each image are represented as a binary sequence. In this example, this is done by creating a binary sequence indicative of the spacing of the laser dots in the image. A '1' in the binary sequence represents a relatively large distance between successive laser dots in the image, whereas a '0' in the binary sequence represents a relatively small distance between successive laser dots in the image. Thus, a binary sequence is generated for each of the UV and visible light images 30, 32.

Secondly, corresponding elements in the binary sequences are summed using an exclusive or (XOR) operation (i.e. the first integers in the sequences are summed, the second integers in the sequences are summed, and so on). If each of the XOR sums are equal to zero then it is identified that the images are temporally aligned. However, if at least one of the XOR sums is not equal to zero (i.e. equal to 1) then the images are not temporally aligned.

In the case that the images are not temporally aligned, one of the binary sequences is shifted by one bit and the process of summing corresponding elements of the binary sequences is repeated. This process is iterated until the each of the XOR sums is zero. The number of bits that a binary sequence has been shifted by to provide that each XOR sum is zero is then used to determine a time-period by which to shift the UV and visible light images 30, 32 relative to each other to provide temporal alignment of the images 30, 32.

In other examples, the time period by which to shift an image is determined using a different technique. For example, a line of a line scanned image may be represented as a '0' if no mark is present in that line, or a '1' if a mark is present in that line. Thus, each line-scanned image 30, 32 may be represented as a binary sequence in a different way to that described above. The above described iterative process of summing corresponding elements using an XOR operator, and shifting a binary sequence relative to the other by a single bit if a sum is non-zero, may then be performed. In this example, the number of bits required to shift a binary sequence by in order to provide temporal alignment corresponds to the number of lines in a line scanned image that an image is to be shifted by to time-align it with the other image.

At step s36, the second UV image 30 is shifted by the determined time-period such that the positions of the laser dots in the second UV image 30 and the second visible light image 32 are aligned.

The use of a pseudo-random sequence of laser dots tends to provide that a pattern of laser dots that can be used to assure relatively precise time-alignment is created in the images. In other examples, this feature is provided by a different type of sequence of laser dots, for example, a random sequence, or a pre-defined sequence having a specific pattern that facilitates alignment of images.

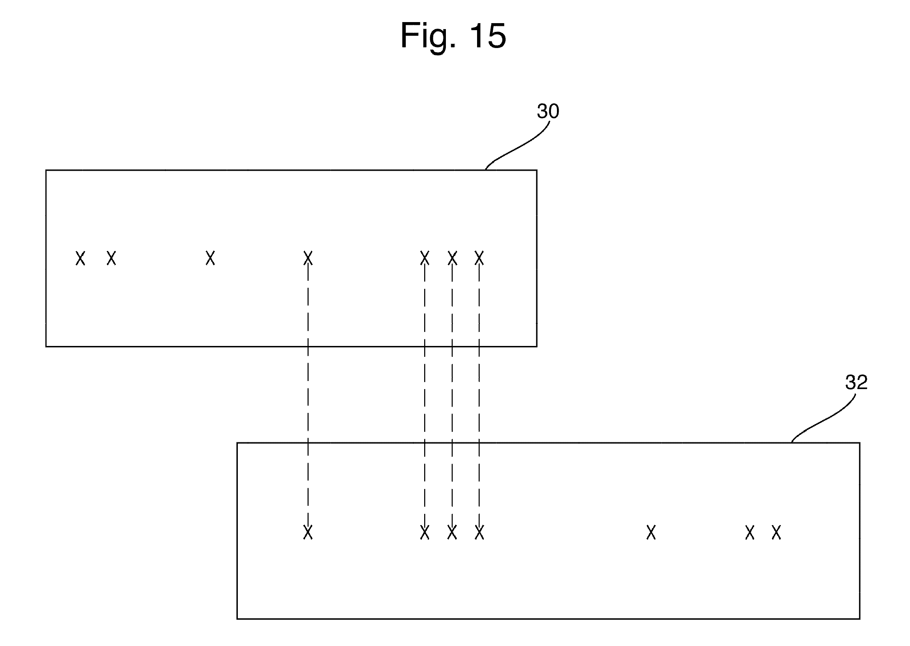

Figure 15 is a schematic illustration (not to scale) of the second UV image 30 and the second visible light image 32 after the second UV image 30 has been shifted such that the positions of the laser dots in the second UV image 30 and the second visible light image 32 are aligned.

In this example, the second UV image 30 is shifted relative to the second visible light image 32. However, in other examples the visible light image 32 is shifted relative to the second UV image 30. Also, in other examples both UV and visible light images may be shifted.

An advantage provided by the above described time-alignment process is that aligning in time images, or image sequences, from different sources is facilitated. Also, the provided process works when the images, or image sequences, from the different sources are different sizes/lengths, or comprise different numbers of images.

A further advantage provided by the above described time-alignment process is that the identification of a portion of an image that corresponds in time to a particular portion of an image from a different source is facilitated. Likewise, the identification a sub-sequence of images from a larger image sequence that corresponds in time to a sub-sequence of images from a different source is facilitated. Thus, if for example an interesting feature is identified in images from one source at a particular point in time, then images taken at that particular time by different sources can be easily identified and analysed to provide further information about the interesting feature.

Moreover, the above described time-alignment process may be advantageously used in combination with any of the above described image registration and/or image registration and camera alignment processes. Thus, the alignment in time, and registration, of images or image sequences taken by different sources tends to be facilitated. Moreover, the above described processes tend to provide that this can be performed in real-time, near real-time and/or in post-processing at a later time.

A further advantage provided by the combination with any of the above described image registration and/or image registration and camera alignment process is that the registering of images and/or the alignment of cameras may be performed over any length of observation.

The provided process of time-alignment advantageously tends to provide for the alignment of sequences of discrete images taken of a scene by different image sources. The sequences of discrete images may be taken by cameras/sensors that may or may not be moving relative to the scene.

Apparatus, including the processor 10, for implementing the above arrangement, and performing any of the method steps described above, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figures 3 and 6 and described above may be omitted or such process steps may be performed in differing order to that presented above and shown in the Figures. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the provided processes are implemented using an autonomous aircraft to take images of an area of terrain as the aircraft flies over the area. However, in other embodiments any or all of the above described processes are implemented in a different system, for example on a different type of vehicle such as a manned or semi-autonomous vehicle, or a manned or unmanned land-based or water-based vehicle. Any or all of the above described processes are particularly useful in industrial applications e.g. applications that involve the monitoring of continuous production or treatment processes and/or applications in which there tend to be few useful reference features in images that are typically used in conventional techniques. For example, the above described processes tend to be particularly effective in sheet metal production quality checking and the like (because the above described technique can be advantageously enhanced to provide a more persistent mark/feature for subsequent remedial action where a defect is discovered).

In the above embodiment, the cameras are moving relative to the surface being imaged (because the aircraft is moving). However, in other embodiments, one or more of the cameras/sensors is stationary with respect to the surface, e.g. in another embodiment the cameras are stationary relative to the scene and each camera is arranged to capture a sequence of discrete images of the scene.

In the above embodiments, images are gathered by two cameras, namely a UV and an visible light camera. However, in other embodiments images are collected from a different number of cameras. These images may then be registered/time-aligned as described above. Moreover, in other embodiments one or more of the cameras may be replaced by a different type of sensor, such as radar, sonar, or an infrared camera.

In the above embodiments, the cameras are line scan cameras. However, in other embodiments one or more of the sensors/cameras may produce an image in a different way, for example by taking a sequence of discrete images of the terrain/scene being analysed.

In the above embodiments, the laser pulse that produces the laser dot is of a wavelength that is visible by all cameras/sensors being used. However, in other embodiments, one or more laser pulses may be implemented at a time, and any number of these one or more laser pulses may be visible to any number of the cameras/sensors being used.

In the above embodiments, the laser dot/line produced by the laser marker had a diameter such that it occupied a single pixel in an image line. Also, the laser pulse that produced that laser dot had a duration that provided that the laser dot was present in a single line of an image. However, in other embodiments a laser feature in the image may have a diameter such that it occupies a different number of image pixels in a line. Also, in other embodiments, the laser pulse may have a different duration such that the laser feature in the image may occupy a different number of lines, for example in other embodiments the laser marker may emit a continuous laser beam.

In the above embodiments, a single laser marker is used to project a single laser dot or single pair of laser lines on to the terrain at a particular time. However, in other embodiments a different number of laser markers may be used to project a different number of laser features. Also, in other embodiments, one or more of the projected laser features may be a different appropriate shape or pattern and of any appropriate size.

In the above embodiments, the feature (i.e. laser dot) that is projected on to the imaged surface (i.e. terrain area) is provided by a laser marker. However, in other embodiments, a different appropriate type of mark is projected onto an imaged surface from an appropriate source so as to provide a feature that can be used to register/align images. Also, in other embodiments a feature is positioned on to the imaged surface by a different method, i.e. other than projection. For example, in other embodiments physical markers may be placed on a surface, e.g. paint spots, chemical markers, burn marks, dye etc may be positioned on a surface and used to perform an above described process.

In the above embodiments, the processor (and image processing) is implemented on board the aircraft. However, in other embodiments the processor/processing is implemented at a location remote from the aircraft, e.g. at a later point in time.

In the above embodiments, the cameras are mounted on an optical bench in the aircraft. However, in other embodiments the cameras are mounted on the aircraft in a different appropriate way so as to provide the above described functionality.

**Claims**

1. A method of performing image processing, the method comprising:

   positioning a mark (14, 20) onto a surface (12);
   using a first sensor (4), generating a first image (16) of the surface (12) with at least a portion of the mark (14, 20) in the first image (16);
   using a second sensor (6), generating a second image (18) of the surface (12) with at least a portion of the mark (14, 20) in the second image (18); and
   performing a process that is dependent upon the respective positions of the at least a portion of the mark (14, 20) in the first image (16) and the second image (18).

2. A method according to claim 1, wherein the step of performing a process that is dependent upon the respective positions of the at least a portion of the mark (14, 20) in the first image (16) and the second image (18) comprises performing an image registration process to register the first and second images.

3. A method according to claim 1 or 2, wherein the step of positioning a mark (14, 20) onto a surface (12) comprises projecting the mark (14, 20) onto the surface (12).

4. A method according to claim 3, wherein the mark (14, 20) is projected onto the surface (12) using a laser (8).

5. A method according to claim 4, wherein the mark (14, 20) is a laser dot (14).

6. A method according to claim 4, wherein the mark (14, 20) comprises a pair of laser lines (20), the laser lines (20) being substantially non-parallel and non-perpendicular to each other.

7. A method according to claim 4, wherein the mark (14, 20) has a non-symmetrical shape.

8. A method according to any of claims 1 to 7, wherein a sensor (4, 6) is a line-scan sensor, and the mark (14, 20) is positioned on the surface (12) such that the at least a portion of the mark (14, 20) in the image (16, 18) generated by that sensor (4, 6) is present in a single line of that image (16, 18).

9. A method according to any of claims 1 to 8, wherein the first sensor (4) and the second sensor (6) are different types of sensor.

10. A method according to claim 9, wherein the second sensor (6) is a visible light camera and the first sensor (4) is either an ultra-violet camera or an infrared camera.

11. A method according to any of claims 1 to 10, wherein:

    the step of positioning a mark (14, 20) onto a surface (12) is performed at each of a plurality of different time-steps in a time period;
    the step of generating a first image (16) is performed for a first portion of the time period;
    the step of generating a second image (18) is performed for a second portion of the time period; and
    the step of performing a process that is dependent upon the respective positions of the at least a portion of the mark (14, 20) in the first image (16) and the second image (18) comprises performing an time-alignment process to temporally align the first and second images.

12. A method according to any of claims 1 to 11, wherein the first sensor (4) and the second sensor (6) are mounted on an aircraft (2).

**13.** Apparatus for performing image processing, the apparatus comprising:

means (8) for positioning a mark (14, 20) onto a surface (12);
a first sensor (4) arranged to generate a first image (16) of the surface (12) with at least a portion of the mark (14, 20) in the first image (16);
a second sensor (6) arranged to generate a second image (18) of the surface (12) with at least a portion of the mark (14, 20) in the second image (18); and
a processor (10) arranged to perform a process that is dependent upon the respective positions of the at least a portion of the mark (14, 20) in the first image (16) and the second image (18).

**14.** A program or plurality of programs arranged such that when executed by a computer system or one or more processors it/they cause the computer system or the one or more processors to operate in accordance with the method of any of claims 1 to 12.

**15.** A machine readable storage medium storing a program or at least one of the plurality of programs according to claim 14.

# Fig. 1

# Fig. 2

# Fig. 3

```
        ( START )
            │
            ▼
```

S2

RECEIVE IMAGE DATA AT PROCESSOR
FROM UV AND VISIBLE LIGHT CAMERAS

S4

DETERMINE POSITION OF LASER DOT
IN UV AND VISIBLE LIGHT IMAGES

S6

DETERMINE TRANSFORMATION TO BE
PERFORMED TO ALIGN LASER DOT IN UV IMAGE
TO LASER DOT IN VISIBLE LIGHT IMAGE

S8

DETERMINE MOVEMENT INSTRUCTIONS FOR
UV CAMERA CORRESPONDING TO THE
TRANSFORMATION

S10

SEND MOVEMENT INSTRUCTION TO
THE OPTICAL BENCH

S12

MOVE UV CAMERA ACCORDING TO THE
MOVEMENT INSTRUCTION

```
            │
            ▼
        ( END )
```

# Fig. 4

# Fig. 5

# Fig. 6

```
        ( START )
            │
            ▼                                    S2
┌──────────────────────────────────────────┐
│      RECEIVE IMAGE DATA AT PROCESSOR      │
│    FROM UV AND VISIBLE LIGHT CAMERAS      │
└──────────────────────────────────────────┘
            │
            ▼                                    S4
┌──────────────────────────────────────────┐
│      DETERMINE POSITION OF LASER DOT      │
│      IN UV AND VISIBLE LIGHT IMAGES       │
└──────────────────────────────────────────┘
            │
            ▼                                    S6
┌──────────────────────────────────────────┐
│       DETERMINE TRANSFORMATION TO BE      │
│  PERFORMED TO ALIGN LASER DOT IN UV IMAGE │
│    TO LASER DOT IN VISIBLE LIGHT IMAGE    │
└──────────────────────────────────────────┘
            │
            ▼                                    S14
┌──────────────────────────────────────────┐
│       TRANSFORM UV IMAGE USING THE        │
│        DETERMINED TRANSFORMATION          │
└──────────────────────────────────────────┘
            │
            ▼
         (  END  )
```

# Fig. 7

# Fig. 8

# Fig. 9

# Fig. 11

# Fig. 10

```
                    START
                      │
                      ▼                                    S16
┌─────────────────────────────────────────────┐
│   RECEIVE IMAGE DATA AT PROCESSOR             │
│   FROM UV AND VISIBLE LIGHT CAMERAS           │
└─────────────────────────────────────────────┘
                      │
                      ▼                                    S18
┌─────────────────────────────────────────────┐
│   PROCESS UV IMAGE DATA TO DETERMINE          │
│   DISTANCE BETWEEN LASER DOTS                 │
│   IN UV IMAGE                                 │
└─────────────────────────────────────────────┘
                      │
                      ▼                                    S19
┌─────────────────────────────────────────────┐
│   PROCESS VISIBLE LIGHT IMAGE DATA TO         │
│   DETERMINE DISTANCE BETWEEN LASER            │
│   DOTS IN VISIBLE LIGHT IMAGE                 │
└─────────────────────────────────────────────┘
                      │
                      ▼                                    S20
┌─────────────────────────────────────────────┐
│   DETERMINE TRANSFORMATION                    │
│   TO REGISTER IMAGES                          │
└─────────────────────────────────────────────┘
                      │
                      ▼                                    S22
┌─────────────────────────────────────────────┐
│   DETERMINE MOVEMENT INSTRUCTIONS FOR         │
│   UV CAMERA CORRESPONDING TO THE              │
│   TRANSFORMATION                              │
└─────────────────────────────────────────────┘
                      │
                      ▼                                    S24
┌─────────────────────────────────────────────┐
│   SEND MOVEMENT INSTRUCTIONS TO               │
│   THE OPTICAL BENCH                           │
└─────────────────────────────────────────────┘
                      │
                      ▼                                    S26
┌─────────────────────────────────────────────┐
│   MOVE UV CAMERA ACCORDING TO THE             │
│   MOVEMENT INSTRUCTIONS                       │
└─────────────────────────────────────────────┘
                      │
                      ▼
                     END
```

# Fig. 12

30

X X     X     X     X X X

# Fig. 13

32

X     X X X     X     X X

# Fig. 14

```
        ┌─────────┐
        │  START  │
        └────┬────┘
             │
             ▼                                              S30
┌─────────────────────────────────────────────┐
│  RECEIVE SECOND UV IMAGE DATA AND SECOND      │
│  VISIBLE LIGHT IMAGE DATA AT PROCESSOR        │
└────────────────────┬──────────────────────────┘
                     │                            S32
                     ▼
┌─────────────────────────────────────────────┐
│        IN EACH IMAGE, DETERMINE               │
│      POSITION OF EACH LASER DOT               │
└────────────────────┬──────────────────────────┘
                     │                            S34
                     ▼
┌─────────────────────────────────────────────┐
│     DETERMINE TIME PERIOD BY WHICH            │
│       TO SHIFT SECOND UV IMAGE               │
└────────────────────┬──────────────────────────┘
                     │
                     ▼
┌─────────────────────────────────────────────┐
│        SHIFT SECOND UV IMAGE BY        S36    │
│        DETERMINED TIME PERIOD                 │
└────────────────────┬──────────────────────────┘
                     │
                     ▼
              ┌─────────┐
              │   END   │
              └─────────┘
```

Fig. 15

Europäisches
Patentamt

European
Patent Office

Office européen
des brevets

# EUROPEAN SEARCH REPORT

Application Number

EP 11 27 5091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/221072 A1 (SE SHUEN Y S [US] ET AL SE SHUEN YAN STEPHEN [CA] ET AL) 5 October 2006 (2006-10-05) * abstract; figure 6 * * paragraphs [0003], [0106], [0107], [0110] - [0112] * | 1-15 | INV. G06T7/00 |
| A | WO 00/47949 A1 (LEICA GEOSYSTEMS AG [CH]; BRAUNECKER BERNHARD [CH]; SZALMASSY ZOLTAN [] 17 August 2000 (2000-08-17) * the whole document * | 1-15 | |
| A | CAVES R G ET AL: "MATCHING MAP FEATURES TO SYNTHETIC APERTURE RADAR (SAR) IMAGES USING TEMPLATE MATCHING", IEEE TRANSACTIONS ON GEOSCIENCE AND REMOTE SENSING, IEEE SERVICE CENTER, PISCATAWAY, NJ, US, vol. 30, no. 4, 1 July 1992 (1992-07-01), pages 680-685, XP000316583, ISSN: 0196-2892, DOI: 10.1109/36.158861 * section A. Simulated Data * | 1,13 | |
| A | QINFEN ZHENG ET AL: "A COMPUTATIONAL VISION APPROACH TO IMAGE REGISTRATION", IEEE TRANSACTIONS ON IMAGE PROCESSING, IEEE SERVICE CENTER, PISCATAWAY, NJ, US, vol. 2, no. 3, 1 July 1993 (1993-07-01), pages 311-326, XP000383916, ISSN: 1057-7149, DOI: 10.1109/83.236535 * abstract * | 1-15 | TECHNICAL FIELDS SEARCHED (IPC)  G06T G01C G01B |

-/--

The present search report has been drawn up for all claims

| Place of search | Date of completion of the search | Examiner |
|---|---|---|
| Munich | 19 October 2011 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 27 5091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOTTESFELD BROWN L: "A SURVEY OF IMAGE REGISTRATION TECHNIQUES", ACM COMPUTING SURVEYS, ACM, NEW YORK, NY, US, US, vol. 24, no. 4, 1 December 1992 (1992-12-01), pages 325-376, XP002942558, ISSN: 0360-0300, DOI: 10.1145/146370.146374 * abstract * | 1-15 | |

-----

TECHNICAL FIELDS
SEARCHED (IPC)

The present search report has been drawn up for all claims

| Place of search | Date of completion of the search | Examiner |
|---|---|---|
| Munich | 19 October 2011 | Rimassa, Simone |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 27 5091

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2011

| Patent document cited in search report | | Publication date | Patent family member(s) | | Publication date |
|---|---|---|---|---|---|
| US 2006221072 | A1 | 05-10-2006 | US 2010098327 A1 | | 22-04-2010 |
| | | | US 2010098328 A1 | | 22-04-2010 |
| WO 0047949 | A1 | 17-08-2000 | NONE | | |

EPO FORM P0459

For more details about this annex : see Official Journal of the European Patent Office, No. 12/82